(19) **Europäisches Patentamt / European Patent Office / Office européen des brevets**

(11) **EP 2 940 426 A1**

(12) **EUROPEAN PATENT APPLICATION**

(43) Date of publication:
04.11.2015 Bulletin 2015/45

(51) Int Cl.:
*G01C 21/20* (2006.01) *H04W 4/04* (2009.01)
*H04W 4/02* (2009.01)

(21) Application number: 14305633.1

(22) Date of filing: 28.04.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: ALCATEL LUCENT
92100 Boulogne-Billancourt (FR)

(72) Inventor: Helbert, Emmanuel
67400 Illkirch (FR)

(74) Representative: Sayettat, Julien Christian
STRATO-IP
18, rue Soleillet
75020 Paris (FR)

(54) **Process for guiding in a building a user connected through at least one mobile terminal to a network**

(57) Process for guiding in a building (1) a user that is connected through at least one mobile terminal (2) to a network (3), said process providing for, as said user selects a targeted position (PT) he wants to reach in said building:
- capturing a video stream of the starting position (PS) of said user in said building by means of said terminal;
- comparing said video stream with pre-recorded video segments (S) representing each a movement between two positions (P) in said building, so as to locate said starting position;
- selecting and ordering some of said video segments to build a guiding video stream which starts with a starting video segment (S1) corresponding to said starting position and ends with a targeted video segment (S8) corresponding to said targeted position;
- delivering to said terminal said ordered video segments in said guiding video stream through said network.

Fig. 2

EP 2 940 426 A1

## Description

The invention relates to a process for guiding in a building a user that is connected through at least one mobile terminal to a network, such as a system available through a network for guiding in a building a user that is connected to said network through at least one mobile terminal.

Location and guiding systems such as Global Positioning System (GPS) ones are well known for helping their users, whether pedestrians or car drivers, to reach easily a targeted position in an unknown geographical zone.

To do so, such GPS systems rely on a satellite coverage for allowing detection in real time of the current position of a user, such as his movement and his direction, so as to select and download an accurate preregistered map to be displayed on a terminal of said user, said displaying evolving in real time with the movement and the direction of said user to provide indications for said user to reach the targeted position according to said current position, said movement and said direction.

However, such systems are not completely satisfactory, especially for guiding a user in a building. Indeed, they lack precision regarding the floor location of the current position of the user and/or of the targeted position said user wants to reach. Moreover, their satellite coverage may be less efficient within a building structure and may be unable to locate the mobile terminal of a user. Furthermore, there very often exist no preregistered map for a geographical zone wherein a building stands.

To avoid these drawbacks, there exist some solutions based on the location in a building of a user of a mobile terminal through a local wireless network implemented in said building, such as a network according to a Wi-Fi protocol, and through Near Field Communication (NFC) cells implemented in said building. However, the implementation of the NFC protocol is not really widespread, not only because many building are not equipped with NFC cells, but also because many mobile terminals are not offering NFC functionalities.

The invention aims to improve the prior art by proposing a solution for easily and accurately locating and guiding in a building a user by means of his mobile terminal, said solution being notably less intrusive and easily adaptive for any types of building by being easily usable for any users of a mobile terminal.

For that purpose, and according to a first aspect, the invention relates to a process for guiding in a building a user that is connected through at least one mobile terminal to a network, said process providing for, as said user selects a targeted position he wants to reach in said building:

- capturing a video stream of the starting position of said user in said building by means of said terminal;
- comparing said video stream with pre-recorded video segments representing each a movement between two positions in said building, so as to locate said starting position;
- selecting and ordering some of said video segments to build a guiding video stream which starts with a starting video segment corresponding to said starting position and ends with a targeted video segment corresponding to said targeted position;
- delivering to said terminal said ordered video segments in said guiding video stream through said network.

According to a second aspect, the invention relates to a system available through a network for guiding in a building a user that is connected to said network through at least one mobile terminal, said system comprising means for allowing said user to select a targeted position he wants to reach in said building, said system further comprising:

- a video segment database for storing pre-recorded video segments representing each a movement between two positions in said building;
- a correlator device comprising means for receiving a video stream of the starting position of said user in said building, said video stream being captured by said terminal, such as means for comparing said video stream with the video segments stored in said database, so as to locate said starting position;
- a builder device comprising means for selecting and ordering some of said video segments to build a guiding video stream which starts with a starting video segment corresponding to said starting position and ends with a targeted video segment corresponding to said targeted position;
- a broadcaster device for delivering to said terminal said ordered video segments in said guiding video stream through said network.

Other aspects and advantages of the invention will become apparent in the following description made with reference to the appended figures, wherein:

- figure 1 represents schematically a system to be implemented in a network to implement a process according to the invention
- figure 2 represents schematically a part of a building wherein a user is to be guided by means of a process according to the invention;
- figure 3 represents schematically another network implementation for a system according to the invention;
- figure 4 represents schematically the video streams that are captured for three users according to their respective starting positions in a building.

In relation to those figures, a process for guiding in a building 1 a user that is connected through at least one mobile terminal 2 to a network 3, such as a system available through a network 3 for guiding in a building 1 a user that is connected to said network through at least one mobile terminal 2, would be described below.

The building 1 can be notably a public establishment, such as an hospital, and can implement a wireless local area network 3 (LAN) such as one according to a Wi-Fi protocol, to which a user visiting said building can connect through his mobile terminal 2, either directly or through a connecting bridge, provided that said terminal is equipped with technical means for allowing such a connection.

The network 3 can also be a wireless wide area network (WAN) that is available in the building 1.

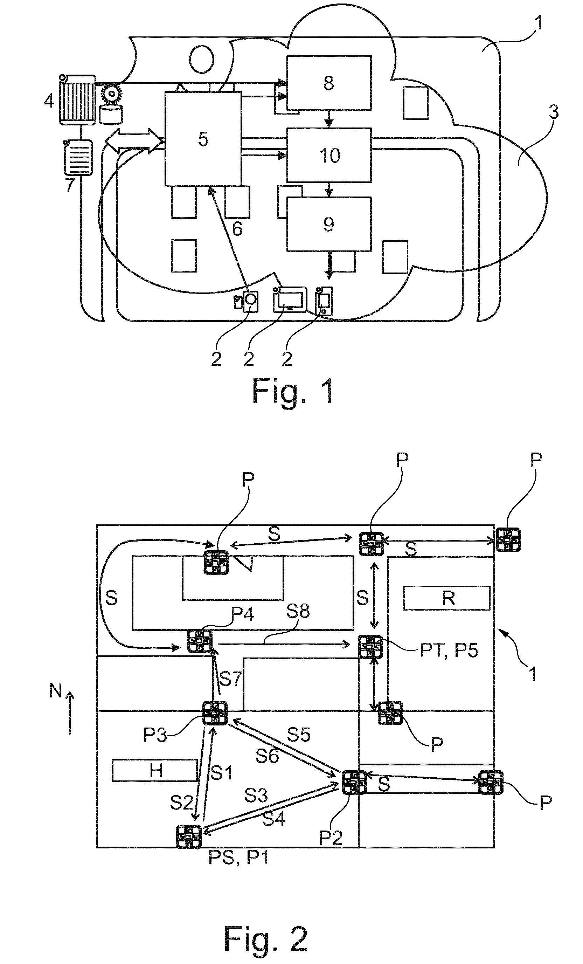

Generally speaking, the mobile terminal 2 can be every type of mobile equipment that comprises means for exchanging real time data with other equipments either through a network or through direct connection with said other equipments. In particular, as represented on figure 2, the mobile terminal 2 can be a smartphone or a tablet, such as those provided by Apple® or Samsung®. The mobile terminal 2 can also be a clothing accessory equipped with such exchanging means and displaying means, such as augmented reality glasses as those developed by Google®.

The process prior provides for allowing the user to select a targeted position PT corresponding to a location in the building 1 that said user wants to reach. For example, if the building 1 is a hospital, the user may be a patient that has an appointment to pass a medical exam, such as a radio exam, and thus wants to reach the radio department R of said hospital, so that the targeted position PT for said user will be the entry of said radio department.

To do so, the system comprises means for allowing the user to select his targeted position PT. In particular, the system can implement a Graphical User Interface (GUI), such as a webpage that the user can reach after the connection of his terminal 2 to the local network 3 through a mobile browser implemented in said terminal, such as the Chrome® browser provided by Google®. The system can notably be configured so as to automatically redirect the user to a captive portal as said user launches the browser on his terminal 2, so as to ease the navigation of said user to the webpage of said system. Moreover, the webpage comprises interactive means for allowing the user to select his targeted position PT, such as a drop-down menu or an interactive button.

Once the user has selected his targeted position PT, his mobile terminal 2 gets connected to the system for allowing said user to be guided towards said targeted position. This connection can be implemented through a classic signalling according to the Session Initiation Protocol (SIP), or even through a Web Real Time Communication (WebRTC) technology, this latter solution having the advantage of not requiring specific client installation and being adapted to manage stream exchanges directly from the browser of the mobile terminal 2.

The process thus provides, as the user selects the targeted position PT he wants to reach in the building 1, for capturing a video stream of the starting position PS of the user in said building by means of the mobile terminal 2 of said user, and for comparing said video stream with pre-recorded video segments S representing each a movement between two positions P in said building, so as to locate said starting position.

To do so, the mobile terminal 2 comprises means for capturing a video stream, such as a camera device implemented in said mobile terminal. In a known manner, smartphones and tablets are equipped with such video capturing means.

In particular, the video capturing means may be automatically launched by the guiding system upon the connection of the mobile terminal 2 to said system. The system may also comprise means for sending to the mobile terminal 2 a message for asking the user to activate the video capturing means of said terminal.

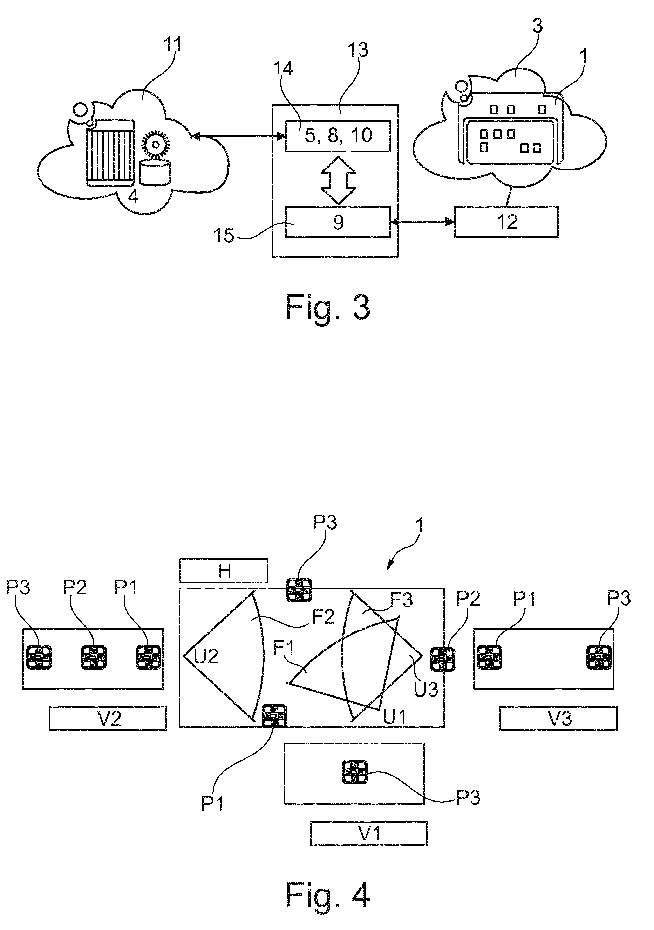

In relation to figure 4, three users U1, U2, U3 are standing at three different positions in the hall H of the building 1, and their respective fields of vision F1, F2, F3 are oriented differently in said hall. Thus, the user U1 sees the entry P3 of the hall H from its position, so that his captured video stream V1 will show the entry P3. In the same way, the users U2, U3 see respectively, from the left to the right of their respective fields of vision F2, F3, the three entries P3, P2, P1 and two entries P1, P3, so that their respective captured video streams V2, V3 will show respectively, from the left to the right, the three entries P3, P2, P1 and entries P1, P3.

Moreover, the system comprises a video segment database 4 for storing pre-recorded video segments S. The video segment database 4 can be notably implemented in a video server, such as broad video servers like Youtube® or the OpenTouch® Video Store service provided by Alcatel-Lucent®, said broad server providing Application Programming Interfaces (API) for allowing the storage and the management of video streams coming from third parties.

In relation to figure 2, the positions P in the building 1 can be entries of a room or crossings between two corridors, each video segment S corresponding to a movement between two of said positions in a given direction and at a constant and normalized speed. These video segments S may be recorded by a camera operator who moves into the building 1 and thus registered in the database 4 by an administrator of the guiding system.

In particular, several video segments S can relate to a same particular room by representing a particular crossing movement in said room, the camera operator registering for each room of the building 1 as many video segments S as possible to cover all the ways to cross said room in every possible directions. For example, as the entry hall H of the building 1 represented on figure 2 comprises three entries P1, P2, P3, at least six different video segments S1-S6 can be registered in relation to said entry room to describe all the possible ways to cross said entry room.

To do so, the camera operator may manually register video segments S. But the video segments S can also be automatically built from one single video stream that shows the entire building positions P, for example by means of specific algorithms that are adapted to detect and analyse specific visual signs installed at each position P in the building 1.

More generally, a single video stream can be processed by a dedicated algorithm that identifies a video segment S in relation to a visual sign detected in the video field of said video stream, so that the appearance of said visual sign corresponds to the beginning of said video segment, whereas the disappearance of said visual sign corresponds to the end of said video segment and the beginning of the consecutive video segment S.

The system also comprises a correlator device 5 comprising means for receiving from the mobile terminal 2, for example through a media flow 6, the captured video stream of the starting position PS of the user in the building 1, such as means for comparing said video stream with the video segments S stored in the database 4 so as to locate said starting position, especially by identifying the starting video segment S which corresponds to said starting position.

To do so, the correlator device 5 may use visual signs that are spread across the building 1, and especially at different key positions P in said building, such as entries of rooms, crossings between corridors, and so on. In particular, the visual signs may be identified by 2D tags that are listed in a table 7 along with the pre-recorded video segments S to which said tags are associated, the correlator device 5 being adapted to detect eventual visual signs in the captured video stream and to interact with said table to identify a corresponding 2D tag and to obtain a reference of an associated video segment S.

The correlator device 5 may also use geo location coordinates that are associated as metadata to stored video segments, the association of such geo location metadata to video segments may be notably possible with advanced video servers such as the Open-Touch Video Store® of Alcatel-Lucent®. Thus, the terminal 2 may also transmit current geo location coordinates of his user along with the captured video stream, so that the correlator device 5 may be adapted to use said transmitted geo location coordinates to identify the starting video segment the associated geo location coordinates matches said transmitted geo location coordinates.

In relation to figure 2, as the user enters in the building 1 by the main entry P1 of the hall H and moves towards the north access P3 of said hall (the north direction being indicated by arrow N), the correlator device 5 will identify the pre-recorded video segment S1 which corresponds to a movement from said main entry to said north access as the starting video segment corresponding to the starting position PS of said user.

More generally, the correlator device 5 compares a stored video segment S with the captured video stream of a user by establishing a difference angle therebetween, said difference depending notably on the three following parameters: the optic focal of the video capturing means of the terminal 2, the movement direction of the user and the direction of said terminal, which corresponds to the direction of the head of the user, and thus to the gaze of the user.

In particular, the terminal 2 can comprise means for associating metadata about the optic focal of its video capturing means to the captured video stream, so as to transmit said optic focal metadata along with said captured video stream to the correlator device 5, so that said device will be adapted to evaluate the real distances between the user of the terminal 2 and the elements in the live images of the captured video stream.

Moreover, the movement direction of the user and the movements of his head both influence the movement of a visual sign in the captured video stream, but the head movements are parasitic parameters that reflect the instability of the video capturing means. Thus, the correlator device 5 may be adapted to detect which of the movement direction and the head movements are responsible of a movement of a visual sign in the captured video stream so as to filter the head movements and stabilise the process.

To do so, the correlator device 5 may be adapted to compute the speed at which a visual sign moves in the captured video stream so that, if said speed is above a given threshold, said correlator device 5 will consider that the movement of said visual sign is due to a head movement and thus will not take said movement into account for the identification of relevant video segments S. In relation to figure 4, the correlator device 5 implements an algorithm which is adapted to select a starting video segment S as the video segments which leads from a reference visual sign near which the user U1, U2, U3 currently stands, and which is not shown on the captured video stream V1, V2, V3, to a reference sign that is located the closest to the image centre of said captured video stream.

For the user U3, the starting video segment can be either the one leading from the entry P2 (near which said user currently stands) to the entry P3, or the one leading from the entry P2 to the entry P1, and the algorithm will arbitrary select one of said segments as the starting video segment of the user U3 according to the movement direction of said user, ie the segment from entry P3 to entry P2 if the user U3 moves towards entry P2 and the segment from entry P3 to entry P1 if the user U3 moves towards entry P1.

For the user U1, as said user currently stands between entries P1, P2 and has his field of vision F1 centered on entry P3, the starting video segment for said user can be either the one leading from entry P1 to entry P3 or the one leading from entry P2 to entry P3. In particular, as these segments are equally consistent, the correlator device 5 may select arbitrary one of them as the starting video segment.

For the user U2, whose field of vision F2 is centered on entry P2, the correlator device 5 may select a segment leading from the standing position of said user to the entry P2 as the starting video segment for said user, provided that said standing position corresponds to a reference visual sign for which such a video segment has been previously recorded in the database 4.

The correlator device 5 may also be adapted to use other information about the starting position PS of the user in correlation with the processing of the captured video stream, such as the location of a wireless station of the network 3 through which said user has connected his terminal 2 to said network.

To do so, the correlator device 5 may for example comprise means to locate the corresponding wireless station thanks to triangulation calculation, which is sufficient to identify the room of the building 1 in which the user is located, and thus to filter and select video segments S corresponding to said room before comparing them to the captured video stream.

The process further provides for selecting and ordering some of the pre-recorded video segments S to build a guiding video stream which starts with the starting video segment S1 corresponding to the starting position PS of the user and ends with a targeted video segment S corresponding to the targeted position PS of said user, and thus for delivering to the terminal 2 said ordered video segments in said guiding video stream through the local network 3.

To do so, the system comprises a builder device 8 comprising means for selecting and ordering some of video segments S of the database 4 to build such a guiding video stream, such as a broadcaster device 9 comprising means for delivering to the terminal 2 said ordered video segments in said guiding video stream through the local network 3.

In particular, upon the connection of the terminal 2 to the system, the broadcaster device 9 is adapted to send to the mobile terminal 2 a video stream for warning the user that his starting position PS is being located while the correlator device 5 compares the captured video stream to pre-recorded video segments S, and thus to send the starting video segment S1 corresponding to said starting position as soon as said starting video segment has been identified by said correlator device and selected by the builder device 8.

In relation to figure 2, the builder device 8 builds the guiding video stream by concatenating all video segments S representing the way between the starting position PS of the user and the targeted position PT he wants to reach. For example, as the user moves between the main entry P1 of the hall H and the north access P3 of said hall and wants to go to the radio department R, the builder device 8 will select the video segment S1 running from said main entry to said north access to be delivered as the starting video segment, and then the video segment S7 running from said north access to the closer corridor crossing P4 to be delivered after the starting video segment S1 in the guiding video stream.

In particular, the builder device 8 may select video segments S to build a guiding video stream corresponding to the shortest path between the starting position PS of the user and his targeted position PT. Thus, in relation to figure 2, the builder device 8 may select the video segment S8 running from the former corridor crossing P4 to the nearest entry P5 of the targeted radio department R, which is located just at the first corridor crossing on the right starting from the former corridor crossing P4, to be delivered as the targeted video segment in the guiding video stream.

To do so, the builder device 8 may use several known methods to compute the optimal path between the starting position PS and the targeted position PT, such as the ones used by common itinerary calculation services like Google Map®, Mappy® or Viamichelin®, said methods generally relying on the computation of the shortest distance in a graph. However, the building device 8 may implement computation means that are enriched with specific parameters according to the accesses of the building 1, such as for example to calculate a path for disabled users.

Thanks to the guiding video stream delivered by the broadcaster device 9 to his terminal 2, the user can watch and compare in real time corridors, halls, rooms and every places he walks through with their representations displayed on said terminal. This would be particularly advantageous if the mobile terminal 2 is a pair of augmented reality glasses such as those developed by Google®. In that case, the user may indeed see the real word on which the guiding video stream is superimposed, which may facilitate the comparisons between said real world and said guiding video stream and thus may help said user to orientate himself into the building 1.

According to an embodiment, the process can provide for adding superimposed information on some of the selected video segments S to build the guiding video stream. To do so, the builder device 8 comprises means for adding such superimposed information.

For example, the builder device 8 can add an arrow on the video segment S7 running from the north access P3 of the entry hall H to the closest corridor crossing P4, so as to indicate to the user standing at said north access that he may then walk towards said corridor crossing. Thus, the user is able to anticipate the next direction to take to follow the path through the targeted radio department R.

In particular, the process provides for delivering the ordered video segments S1, S7, S8 in the guiding video stream synchronically with a movement of the user, so that a video segment S1, S7, S8 currently delivered in said guiding video stream corresponds to a current position P of said user. Thus, the guiding video stream delivered to the terminal 2 will almost exactly match what said user is currently seeing from his current position P in the building 1.

To do so, the system comprises a synchronizer device 10 comprising means for allowing the broadcaster device 9 to deliver the ordered video segments S1, S7, S8 in the guiding video stream synchronically as such. In relation to figure 1, the synchronizer device 10 receives from the correlator device 5 information in relation to the current position P and movement of the user while receiving from the builder device 8 the ordered video segments S1, S7, S8 to be delivered in a guiding video stream by the broadcaster device 9, and thus uses said information to interact with the broadcaster device 9 for the synchronized delivering of said ordered video segments to the terminal 2.

The process notably provides for delivering in the guiding video stream the current video segment S1, S7, S8 at a delivering speed which is synchronized with a moving speed of the user. To do so, the synchronizer device 10 comprises means for synchronizing the delivering speed at which the broadcaster device 9 will deliver the current video segment S1, S7, S8 in the guiding video stream with the moving speed of the user.

In particular, the moving speed of the user is provided to the synchronizer device 10 by the correlator device 5, which comprises means for calculating said moving speed from the captured video stream sent in real time by the terminal 2. For example, the correlator device 5 can calculate the moving speed by measuring variations of geometrical angles between visual signs included in the building walls when the user moves among said visual signs, and thus by combining said variations with the known distances between theses visual signs and some optical characteristics of the video capturing means of the terminal 2.

The correlator device 5 further communicates to the synchronizer device 10 the calculated moving speed along with information about the current video segment S1, S7, S8 corresponding to the current position P of the user, so that the synchronizer device 10 can synchronize the delivering of said current video segment in the guiding video stream by synchronizing the delivering speed of said current video segment with said moving speed.

The process notably provides for comparing the moving speed of the user with a recording speed at which the current video segment S1, S7, S8 corresponding to the current position P of the user has been recorded, said recording speed corresponding to the speed at which the camera operator moved during said recording, so as to deliver said current video segment in the guiding video stream at a delivering speed that is synchronized with said moving speed.

To do so, the synchronizer device 10 comprises means for comparing the moving speed of the user with the recording speed of the current video segment S1, S7, S8, so that the broadcaster device 9 will deliver said current video segment in the guiding video stream with a delivering speed that is synchronized as such.

Thus, if the user stops moving, the current video segment S1, S7, S8 will be delivered with a still image. Moreover, if the moving speed of the user is faster - respectively slower - than the recording speed of the current video segment S1, S7, S8, the current video segment S1, S7, S8 will be delivered with a faster - respectively slower - delivering speed. The acceleration - respectively the deceleration - of the delivering speed can be notably obtained by removing - respectively adding, notably by duplication - some frames of the concerned video segment S1, S7, S8.

In particular, the process provides for calculating a synchronization coefficient upon the comparison of the moving speed of the user with the recording speed of the corresponding current video segment S1, S7, S8, the delivering speed of said current video segment in the guiding video stream being synchronized by means of said coefficient.

To do so, the synchronizer device 10 comprises means for calculating such a synchronization coefficient upon such a comparison, so that the broadcaster device 9 will synchronize the delivering speed of the current video segment S1, S7, S8 in the guiding video stream by means of said coefficient.

The synchronization coefficient K may be calculated according to the following formula:

$$K = (f_B/f_R).(S_R/S_V)$$

wherein $f_B$ corresponds, in frames per second, to the delivering speed of a current video segment S1, S7, S8 in a guiding video stream, $f_R$ corresponds, in frames per second, to the recording speed of said current video segment, $S_R$ corresponds, in meters per second, to the moving speed of the camera operator during the recording of said current video segment and $S_V$ corresponds, in meters per second, to the moving speed of the user.

Thus, the synchronization coefficient K can be interpreted as a frame replication/removal coefficient the broadcaster device 9 may apply to frames of the current video segment S1, S7, S8 to synchronize the delivering speed of said current video segment in the guiding video stream. For example, when K=2, the broadcaster device 9 may duplicate every frames of the current video segment S1, S7, S8, when K=3/2, the broadcaster device may add a frame every two frames in said current video segment, and when K=1/2, the broadcaster device may remove a frame every two frames in said current video segment.

Hence, the invention can create a retroactive loop between the moving speed of the user and the recording speed of the corresponding current video segment S1, S7, S8, so as to deliver to said user a built-on-the-fly guiding video stream showing to said user in real time a path to the targeted position PT in the building 1.

In relation to figure 3, the system is implemented in three parts:

- a cloud video service 11 comprising the video segment database 4;

- a Central Processing Unit (CPU) service 13 comprising a first sub-service 14 in charge of the video processing steps, wherein the correlator device 5, the builder device 8 and the synchronizer device 10 are implemented, such as a second sub-service 15 in charge of establishing a video link between the terminal 2 of the user and the outcome of the video processing service 14, the broadcaster device 9 being implemented in said second sub-service;

- a connection service represented by a local Wi-Fi network 3 in charge of offering a network access to the terminal 2 of the user, said network communicating with the video link sub-service through a Wi-Fi controller device 12.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Process for guiding in a building (1) a user that is connected through at least one mobile terminal (2) to a network (3), said process providing for, as said user selects a targeted position (PT) he wants to reach in said building:

   - capturing a video stream of the starting position (PS) of said user in said building by means of said terminal;
   - comparing said video stream with pre-recorded video segments (S) representing each a movement between two positions (P) in said building, so as to locate said starting position;
   - selecting and ordering some of said video segments to build a guiding video stream which starts with a starting video segment (S1) corresponding to said starting position and ends with a targeted video segment (S8) corresponding to said targeted position;

   - delivering to said terminal said ordered video segments in said guiding video stream through said network.

2. Process according to claim 1, **characterized in that** it provides for delivering the ordered video segments (S1, S7, S8) in the guiding video stream synchronically with a movement of the user, so that a video segment (S1, S7, S8) currently delivered in said video stream corresponds to a current position (P) of said user.

3. Process according to claim 2, **characterized in that** it provides for delivering in the guiding video stream the current video segment (S1, S7, S8) at a delivering speed which is synchronized with a moving speed of the user.

4. Process according to claim 3, **characterized in that** it provides for comparing the moving speed of the user with a recording speed at which the current video segment (S1, S7, S8) corresponding to the current position (P) of said user has been recorded, so as to deliver said current video segment in the guiding video stream at a delivering speed that is synchronized with said moving speed.

5. Process according to claim 4, **characterized in that** it provides to calculate a synchronization coefficient upon the comparison of the moving speed of the user with the recording speed of the current video segment (S1, S7, S8), the delivering speed of said current video segment in the guiding video stream being synchronized by means of said coefficient.

6. Process according to any of claims 1 to 5, **characterized in that** it provides for adding superimposed information on some of the selected video segments (S1, S7, S8) to build the guiding video stream.

7. System available through a network (3) for guiding in a building (1) a user that is connected to said network through at least one mobile terminal (2), said system comprising means for allowing said user to select a targeted position (PT) he wants to reach in said building, said system further comprising:

   - a video segment database (4) for storing pre-recorded video segments (S) representing each a movement between two positions (P) in said building;
   - a correlator device (5) comprising means for receiving a video stream of the starting position (PT) of said user in said building, said video stream being captured by said terminal, such as means for comparing said video stream with the video segments (S) stored in said database, so as to locate said starting position;

- a builder device (8) comprising means for selecting and ordering some of said video segments to build a guiding video stream which starts with a starting video segment (S1) corresponding to said starting position and ends with a targeted video segment (S8) corresponding to said targeted position;
- a broadcaster device (9) for delivering to said terminal said ordered video segments in said guiding video stream through said network.

8. System according to claim 7, **characterized in that** it comprises a synchronizer device (10) comprising means for allowing the broadcaster device (9) to deliver the ordered video segments (S1, S7, S8) in the guiding video stream synchronically with a movement of the user, so that a video segment (S1, S7, S8) currently delivered in said video stream corresponds to a current position (P) of said user.

9. System according to claim 8, **characterized in that** the synchronizer device (10) comprising means for synchronizing the delivering speed at which the broadcaster device (9) will deliver the current video segment (S1, S7, S8) in the guiding video stream with a moving speed of the user.

10. System according to claim 9, **characterized in that** the synchronizer device (10) comprises means for comparing the moving speed of the user with a recording speed at which the current video segment (S1, S7, S8) corresponding to the current position (P) of said user has been recorded, so that the broadcaster device (9) will deliver said current video segment in the guiding video stream at a delivering speed that is synchronized with said moving speed.

11. System according to claim 10, **characterized in that** the synchronizer device (10) comprises means for calculating a synchronization coefficient upon the comparison of the moving speed of the user with the recording speed of the current video segment (S1, S7, S8), so that the broadcaster device (9) will synchronize the delivering speed of said current video segment in the guiding video stream by means of said coefficient.

12. System according to any of claims 7 to 11, **characterized in that** the builder device (8) comprises means for adding superimposed information on some of selected video segments (S1, S7, S8) to build the guiding video stream.

Fig. 1

Fig. 2

Fig. 3

Fig. 4

Europäisches
Patentamt

European
Patent Office

Office européen
des brevets

# EUROPEAN SEARCH REPORT

Application Number

EP 14 30 5633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/157682 A1 (LING CURTIS [US]) 20 June 2013 (2013-06-20) * paragraphs [0025] - [0077] * ----- | 1-12 | INV. G01C21/20 H04W4/04 |
| X | US 2013/141565 A1 (LING CURTIS [US]) 6 June 2013 (2013-06-06) * paragraphs [0020] - [0054] * ----- | 1-12 | ADD. H04W4/02 |
| A | US 2013/237179 A1 (POTINENI RAJESH CHANDRA [IN] ET AL) 12 September 2013 (2013-09-12) * paragraphs [0031] - [0033] * ----- | 1-12 | |
| A | US 8 296 063 B1 (BAILLOT YOHAN [US]) 23 October 2012 (2012-10-23) * column 1, line 5 - column 6, line 55 * ----- | 1-12 | |

TECHNICAL FIELDS SEARCHED (IPC)

G01C
H04W

The present search report has been drawn up for all claims

| Place of search | Date of completion of the search | Examiner |
|---|---|---|
| Munich | 6 October 2014 | Biro, Udo Bela |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

......................................................................
& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 14 30 5633

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2014

| Patent document cited in search report | | Publication date | Patent family member(s) | Publication date |
|---|---|---|---|---|
| US 2013157682 | A1 | 20-06-2013 | NONE | |
| US 2013141565 | A1 | 06-06-2013 | NONE | |
| US 2013237179 | A1 | 12-09-2013 | NONE | |
| US 8296063 | B1 | 23-10-2012 | NONE | |

EPO FORM P0459

For more details about this annex : see Official Journal of the European Patent Office, No. 12/82